# EUROPEAN PATENT SPECIFICATION

(11) **EP 3 838 080 B1**
(45) Date of publication and mention of the grant of the patent: **22.11.2023**
(21) Application number: 20213400.3
(22) Date of filing: 11.12.2020
(51) Int. Cl.: A47J 31/44, A47J 31/36

(54) **MACHINE FOR PREPARING INFUSED BEVERAGES**
MASCHINE ZUR HERSTELLUNG VON GETRÄNKEN MITTELS INFUSION
MACHINE POUR PREPARATION DES BOISSONS PAR INFUSION

(30) Priority: 19.12.2019 IT 201900024787
(43) Date of publication of application: 23.06.2021
(73) Proprietor: Capitani S.r.l., 22070 Solbiate (CO) (IT)
(72) Inventor: CAPITANI, Gionata, 22070 Albiolo (CO) (IT)
(74) Representative: Fabiano, Piero

(56) References cited:
- WO-A1-2015/004551
- WO-A1-2016/005352
- WO-A1-2017/134544
- WO-A1-2019/021076

## Description

### Field of the invention

The present invention concerns the field of machines for making infused beverages such as coffee, tea, herbal teas, chocolate, etc. starting from a capsule or pod containing an aromatic substance and the respective infusion assemblies.

### Known art

The known infusion devices of coffee machines generally comprise a first infusing element usually named female infuser, shaped like a cup and comprising a cavity apt to house an infusion capsule and/or pod containing an aromatic substance, and a second element usually named male infuser, apt to close the aforesaid cavity so that to define, together with the first infusing element, an infusion chamber.

The capsule containing the aromatic substance is placed or transported into the infusion chamber until the extraction of the aromatic substance occurs with the injection of hot pressurized water into the infusion capsule and/or pod.

The infusion chamber is in communication with at least one duct for the outflow of the infused beverage, ending with a nozzle or hopper for the outflow of the beverage.

Generally, the producers of capsules or pods for infused beverages, especially coffee, would like that the machines for preparing infused beverages, directly or indirectly marketed by them, to be able to work only with their capsules or pods and not with compatible capsules or pods.

In recent years, the Applicant has however noticed a proliferation of compatible capsules which increasingly lowers the profit margins of the sector.

The Applicant has thus addressed the problem of producing a machine which can only work for the capsules or pods of a specific producer and not with capsules or pods of similar shape and size.

Moreover, the Applicant has addressed the problem of making a machine for preparing infused beverages, which is adapted to recognize the entering capsule or pod and to determine, according to given criteria, whether or not to operate for delivering the infused beverage.

WO2016/005352 and WO 2019/021076 disclose machines for preparing infused beverages comprising a code reader.

Finally, the Applicant has further addressed the problem of making a machine for preparing infused beverages adapted to recognize the entering capsule or pod that is simple and relatively economic to make and contemporaneously reliable.

### Summary of the invention

Thus, the invention concerns a machine for preparing infused beverages comprising the features of independent claim 1. Preferred embodiments of the invention are claimed in the dependent claims.

Among the countless advantages of the machine according to the present invention, let us recall the one of allowing the recognition of a code placed on a capsule or pod entering the infusion assembly and, whenever the same is recognized, of enabling or not the delivery of the infused beverage.

The positioning of the reader, outside of the shell, at least during the reading of the code, allows it to exploit sunlight or light from outside of the machine to read the code, in favor of reading reliability and energy saving.

Moreover, the positioning of the reader, outside of the shell, at least during the reading of the code, allows it to not be concerned by the vapors or liquids circulating in the machine.

The present invention can have at least one of the preferred characteristics described hereunder.

Advantageously, the capsule comprises a supporting element configured to hold the capsule or pod in a reading position for a given interval of time before being inserted into the inlet opening.

Preferably, the machine comprises a housing seat for the code reader; the housing seat being configured such as not to protrude with respect to the shell when the reader is in said at rest position.

This allows to reduce the vertical volumes of the machine.

Conveniently, when the code reader is in said working position, it protrudes with respect to said housing seat, while it does not protrude from said housing seat when the reader is in said at rest position.

Conveniently, the machine comprises elastic means configured to bring back the code reader from the at rest position to the working position, during the opening movement of the infusion assembly.

Preferably, the code reader is a bar code reader, advantageously it is a two-dimensional bar code reader.

Further characteristics and advantages of the invention will become clearer in the detailed description of some preferred, but not exclusive, embodiments of a machine for preparing an infused beverage according to the present invention.

### Brief description of the drawings

Such description will be set forth hereunder with reference to the accompanying drawings, provided by way of example only and thus not limiting, in which:
- figure 1a shows a partially sectional schematic side view of a first embodiment of the machine according to the present invention with the infusion assembly open;
- figure 1b shows a schematic view of the machine of figure 1a with the holding element in a holding position for intercepting the capsule or pod entering the infusion assembly;

- figure 1c shows a schematic view of the machine of figure 1a with the infusion assembly closed;
- figure 2a shows a partially sectional schematic side view of a second embodiment of the machine according to the present invention with the infusion assembly open;
- figure 2b shows a schematic view of the machine of figure 2a with the holding element in a holding position for intercepting the capsule or pod entering the infusion assembly;
- figure 2c shows a schematic view of the machine of figure 2a with the infusion assembly closed.

### Detailed description of embodiments of the invention

With reference to the figures, a machine for preparing an infused beverage by means of a capsule or pod 20 containing an aromatic substance according to the present invention is shown.

In a known way, the machine comprises an infusion assembly and an outer shell 23 configured to contain at least the infusion assembly 1.

The infusion assembly 1, as shown in the figures, comprises a first cup-shaped infusing element 3 provided with a cavity for accommodating an infusion capsule 20 therein and a second infusing element 5 which cooperates with the first infusing element so that to define, when coupled therewith, an infusion chamber.

In a known way, the capsule 20 comprises a cup-shaped body containing a given amount of a powdered substance for the infusion, such as for example powdered coffee, and is provided with a closing wall which seals the cup-shaped body.

The first infusing element 3 and the second infusing element 5 are supported by a supporting frame 2. For example, said frame 2 has a parallelepiped box-shaped structure extending mainly along a main axis X-X which can be horizontal in a preferred embodiment.

The supporting frame 2 comprises two side plates 16 opposite one another and parallel to the main axis X-X. The first infusing element 3 and the second infusing element 5 are placed between and are supported by said side plates 16.

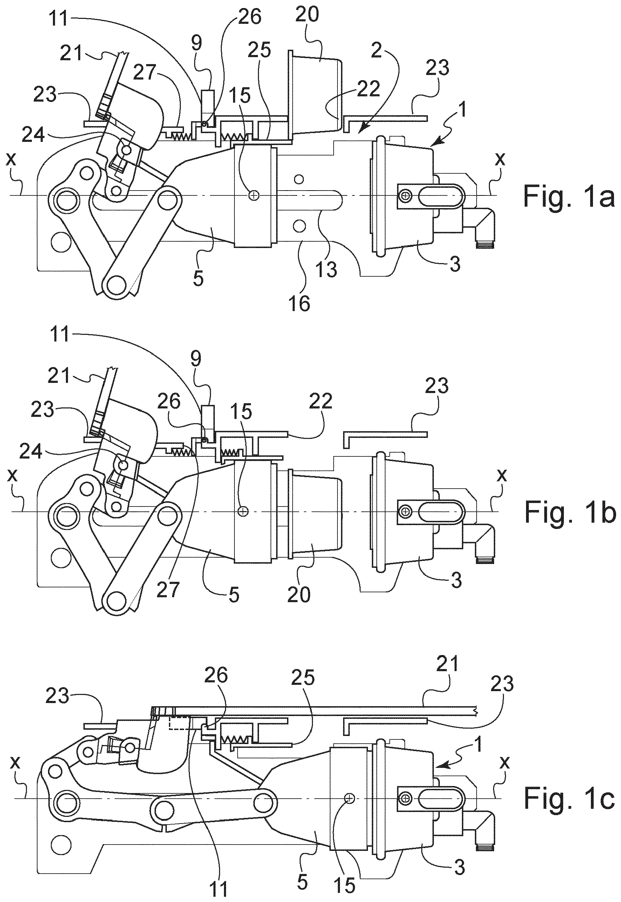

At least one between said first infusing element 3 and said second infusing element 5 is a movable infuser. Said movable infuser is translatable with respect to the other along a translation axis coincident with or parallel to the main axis X-X of the frame 2. The movable infuser, which in the preferred embodiment example shown is the second infusing element 5, is movable between an open retracted position, shown in figures 1a and 1b, and a closed forward position (shown in figure 1c) for forming the infusion chamber.

In the closed position, the second infusing element 5 is alongside and adjacent to the first infusing element 3 so that to close its cavity 4 which houses the infusion capsule, thus achieving a hermetic seal.

For better clarity of exposition and according to the accompanying figures, reference will be made to the second infusing element 5 as the movable infusing element in the description hereunder, but it will be clear to the technician of the field that the teaching provided by the present invention can also easily be applied whenever the first infusing element 3 is the movable infusing element.

Two supporting pins 15, extending substantially perpendicularly with respect to the translation axis X-X, are present for guiding the translation of the second infusing element 3 towards and from said first infusing element 5.

The supporting pins 15 are combined with the one between the first 3 and the second 5 infusing element that is movable with respect to the other, the pins 15 are combined with the second infusing element 5 in the embodiment shown in the figures.

The supporting pins 15 are arranged diametrically opposite with respect to the movable infusing element 5.

The supporting pins 15 are held at their ends by the side plates 16 through appropriate guiding means.

According to an embodiment, the guiding means are represented by a couple of guide slots 13 obtained each in a respective plate 16.

Each slot 13 has a linear extent, substantially straight, in a direction parallel to the translation axis X-X and extends for an extent such as to allow to move the second infusing element 5 from the closed position, shown in figure 1c, to the position of maximum opening shown in figure 1a.

In the embodiment shown in the figures, an actuating lever 21 configured to be operated by a user is present outside of the shell to actuate the translation of the second infusing element 5 from the closed position, shown in figure 1c, to the position of maximum opening, shown in figure 1a.

Alternatively, the translation of the second infusing element 5 from the closed position, shown in figure 1c, to the position of maximum opening, shown in figure 1a, could be actuated by an electric motor driven by a control unit.

In the embodiment shown in the figures, the actuating lever 21 extends from a distal position of the upper portion of the machine. In detail, always with reference to the embodiment shown in the figures, the actuating lever 21 has a first end hinged to the shell and/or frame of the machine and a second free end, not shown in the figures.

In the embodiment shown in the figures, the second end is in a less distal position with respect to the user.

The upper portion of the machine further comprises an inlet opening 22 configured to allow the access of the capsule or pod 20 to the infusion assembly and, in detail, to the infusion chamber.

The inlet opening 22 is obtained on the outer surface of the shell positioned directly on top of the infusion assembly 1. In detail, in the embodiment shown in the figures, when the second infusing element 5 is in the position of maximum opening, shown in figure 1a, the inlet opening 22 is above the space between the first 3 and the second 5 infusing element.

A code reader 9 is further present at the inlet opening 22, in the upper portion of the machine.

Preferably, the code reader 9 is a bar code reader, preferably, the code reader 9 is a bar code reader of the two-dimensional type, such as a QR code.

Alternatively, the code reader 9 could be an optic reader of different codes, such as brands, indicia or drawings, paints or colors without thereby departing from the protection scope of the present invention.

In the embodiment shown in the figures, the code reader 9 is placed between the hinging point 24 of the actuating lever 21 and the inlet opening 22.

The code reader 9 is movable between a working position, shown in figure 1a, wherein it is at least partially outside of the shell 23 in a position such as to allow the reading of a code placed on a capsule or pod 20 entering the inlet opening 22 and an at rest position, shown in figure 1c, wherein it is at least partially contained inside the shell.

When the code reader 9 is in its working position, it is arranged according to a straight configuration, substantially orthogonal to the translation axis X-X.

Alternatively, when the code reader 9 is in its working position, it could be arranged tilted with respect to the translation axis X-X.

When the code reader 9 is in its working position, at least a portion thereof, in particular the one able to visually detect the code, is arranged outside of the machine such as to protrude with respect to the shell 23.

The machine has a housing seat 11 to allow the at least partial insertion of the code reader 9, when the latter is in its at rest position, shown in figure 1c, into of the shell 23. The housing seat 11 is configured so as not to protrude from the shell 23 when the code reader 9 is in its at rest position.

Preferably, the housing seat 11 is configured such as to completely contain the code reader so that the latter does not protrude from the shell 23 when the code reader 9 is in its at rest position.

In the embodiment shown in figures 1a-1c, the code reader 9 is hinged at an end 26 thereof to a wall of the housing seat 11 such as to be able to rotate between the working position and the at rest position, and vice-versa.

Elastic means 27, such as a coil spring, push the code reader 9 to its working position.

In other words, the code reader 9 always tends to return to its working position, shown in figure 1a.

The switching from the working position (fig. 1a) to the at rest position (fig. 1c) occurs contemporaneously with the movement of the second infuser 5 from the open position (fig. 1a) to the closed position (fig. 1c).

In particular, the switching from the working position to the at rest position of the code reader 9 occurs through the actuation of the actuating lever 21 which, by going down, actuates the leverage 30 for moving the second infusing element 5 and, consequently, interferes with at least one end of the code reader 9 such as to force it to go down in the housing seat 11, against the action of the elastic means 27.

Contrarily, in addition to actuating the leverage 30 responsible, in this case, for the movement of the second infusing element 5 towards its open position, the raising back of the actuating lever 21 progressively generates a space which allows the elastic means 27 to bring back the code reader 9 to its working position (fig. 1a).

The machine has a holding element, in other words an element holding the capsule or pod 20 for a few moments in an appropriate reading position before entering the machine, such as to allow a good reading of the code present on the capsule or pod 20.

In the embodiment shown in the figures, the holding element comprises a ledge 25 slidable between a holding position, shown in figure 1a, and a retracted position, shown in figure 1b.

Alternatively, the ledge-like element could be a fork, without departing from the protection scope of the present invention.

The ledge 25 is substantially arranged parallel to the translation axis X-X at the inlet opening 22.

In its holding position (fig. 1a), the ledge 25 is arranged so that to at least partially intercept the inlet opening 22 such as to not allow the insertion of the capsule or pod 20 into the infusion chamber.

In fact, in this position, the capsule 20 entering the opening leans on the ledge 25 which thus holds it in the upright position, thus allowing the code reader 9 to read the code placed on the lid of the capsule 20 itself.

In the retracted position, the ledge 25 is away from the inlet opening 22 such as to allow the insertion of the capsule or pod 20 into the infusion chamber.

Preferably, the ledge 25 substantially translates by staying parallel to the axis X-X between the holding position (fig. 1a) and the retracted position (fig. 1b).

Also the switching of the ledge 25 from the holding position to the retracted position occurs during the movement of the second infuser 5 from the open position (fig. 1a) to the closed position (fig. 1c).

The machine can further provide second elastic means 28 configured to bring back said ledge 25 from said retracted position to said holding position, during the opening movement of said infusion assembly 1.

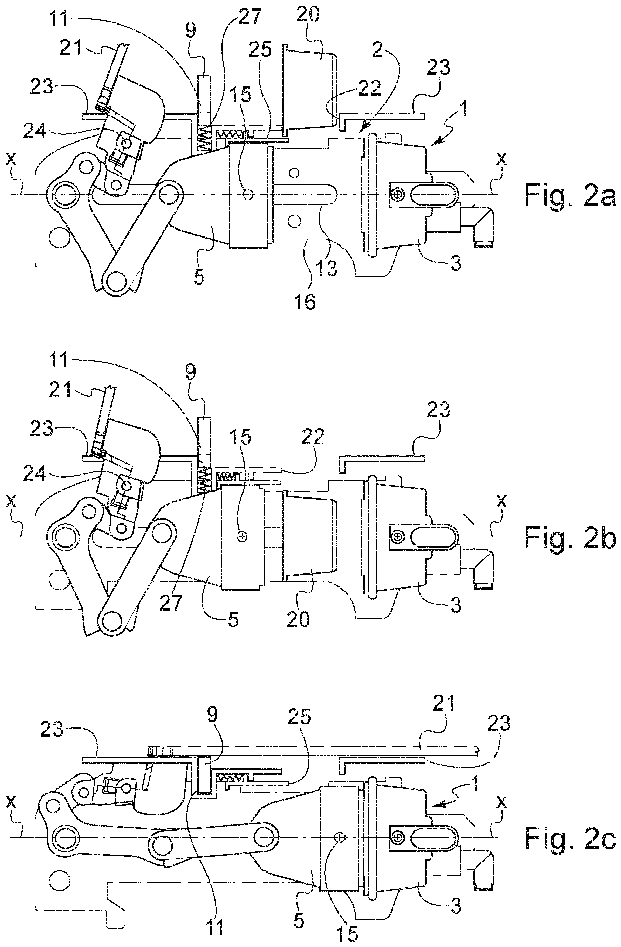

A second embodiment of the machine according to the present invention, quite similar to that shown in figures 1a-1c, with the exception of the fact that the code reader 9 translates, preferably vertically, from the working position to the at rest position, and vice-versa, is shown in figures 2a-2c.

In the embodiment shown in figures 2a-2c, the code reader 9 translates between its working position shown in figure 2a, wherein at least a portion thereof, the one able to visually detect the code, is arranged outside of the machine such as to protrude with respect to the shell 23, and an at rest position shown in figure 2c, wherein it is arranged inside the machine such as to not protrude with respect to the shell 23.

In detail, also in this embodiment, the machine provides a housing seat 11 for the code reader 9, when the latter is in its working position, a portion thereof, the one adapted to visually detect the code, is arranged outside of the housing seat 11 (fig. 2a), when the code reader 9 is in its at rest position, it is completely contained inside the housing seat 11 and the shell 23.

Also according to this embodiment, the switching from the working position (fig. 2a) to the at rest position (fig. 2c) occurs contemporaneously to the movement of the second infuser 5 from the open position (fig. 2a) to the closed position (fig. 2c).

In particular, the switching from the working position to the at rest position of the code reader 9 occurs through the actuation of the actuating lever 21 which, by going down, actuates the leverage 30 for moving the second infusing element 5 and, consequently, interferes with at least one end of the code reader 9 such as to force it to go down in the housing seat 11, against the action of the elastic means 27.

Contrarily, in addition to actuating the leverage 30 responsible, in this case, for the movement of the second infusing element 5 towards its open position, the raising back of the actuating lever 21 progressively generates a space which allows the elastic means 27 to bring back the code reader 9 to its working position (fig. 2a).

Also according to this embodiment, the machine has a holding element, in other words an element holding the capsule or pod 20 for a few moments in an appropriate reading position before entering the machine, such as to allow a good reading of the code present on the capsule or pod 20.

In the embodiment shown in the figures, the holding element comprises a ledge 25 slidable between a holding position, shown in figure 2a, and a retracted position, shown in figure 2b.

The ledge 25 is substantially arranged parallel to the translation axis X-X at the inlet opening 22.

In its holding position (fig. 2a), the ledge 25 is arranged so that to at least partially intercept the inlet opening 22 such as to not allow the insertion of the capsule or pod 20 into the infusion chamber.

In fact, in this position, the capsule 20 entering the opening leans on the ledge 25 which thus holds it in the upright position, thus allowing the code reader 9 to read the code placed on the lid of the capsule 20 itself.

In the retracted position (fig. 2b), the ledge 25 is away from the inlet opening 22 such as to allow the insertion of the capsule or pod 20 into the infusion chamber.

Preferably, the ledge 25 substantially translates by staying parallel to the axis X-X between the holding position (fig. 2a) and the retracted position (fig. 2b).

Also the switching of the ledge 25 from the holding position to the retracted position occurs during the movement of the second infuser 5 from the open position (fig. 2a) to the closed position (fig. 2c).

Also in this case, the machine can provide second elastic means 28 configured to bring back said ledge 25 from said retracted position to said holding position, during the opening movement of said infusion assembly 1.

A series of linked levers can be provided in alternative to the first and second elastic means 27, 28.

Several changes can be made to the embodiments described in detail, all anyhow remaining within the protection scope of the invention, defined by the following claims.

## Claims

1. Machine for preparing infused beverages, comprising:
- an infusion assembly (1) provided with a first infusing element (3) provided with at least one cavity (4) for at least partially accommodating one capsule or pod (20) and a second infusing element (5) shaped to cooperate with said first infusing element (3) so that to define, when coupled therewith, an infusion chamber;
- at least one between the first (3) or the second infusing element (5) being movable between an open position, wherein said second infusing element (5) is away from said first infusing element (3), and a closed position, wherein said first infusing element (3) is coupled with the second infusing element (5) so that to define said infusion chamber;
- a shell (23) shaped to at least partially contain said infusion assembly (1);
- an inlet opening (22) to allow the access of the capsule or pod 20 to said infusion assembly (1);
- said shell (23) having said inlet opening (22);
**characterized by** comprising:
- a code reader (9) arranged at least partially outside of said shell (23), above and in the proximity of said inlet opening (22);
- said code reader (9) is movable between a working position and a rest position, wherein in said working position the code reader (9) it is at least partially outside of said shell (23) in a position such as to allow the reading of a code placed on a capsule or pod (20) entering said inlet opening (22) and wherein at said rest position, said code reader (9) is at least partially contained in said shell (23).

2. Machine for preparing infused beverages according to claim 1, **characterized by** comprising a holding element configured to hold said capsule or pod (20) in a reading position for an interval of time before being inserted in said inlet opening (22).

3. Machine (10) for preparing infused beverages according to claim 1, **characterized by** comprising a housing seat (11) for said code reader (9); said housing seat (11) being configured such as not to protrude from said shell (23) when the code reader (9) is in said at rest position.

4. Machine for preparing infused beverages according to claim 3, **characterized in that** when the code reader (9) is in said working position, it protrudes with respect to said housing seat (11), while it does not protrude from said housing seat when the code reader (9) is in said at rest position.

5. Machine for preparing infused beverages according to claim 1, **characterized by** comprising elastic means (27) configured to bring back said code reader (9) from said at rest position to said working position, during the opening movement of said infusion assembly (1).

6. Machine for preparing infused beverages according to claim 1, **characterized in that** said code reader (9) is a bar code reader.

7. Machine for preparing infused beverages according to claim 1, **characterized in that** said code reader (9) is a two-dimensional bar code reader.

8. Machine for preparing infused beverages according to claim 2, **characterized in that** said holding element comprises a ledge (25) slidable between a holding position (25), wherein it is arranged so that to at least partially intercept the inlet opening (22), and a retracted position, wherein the insertion of the capsule or pod (20) into the infusion chamber is allowed.

9. Machine for preparing infused beverages according to claim 8, **characterized by** comprising second elastic means (28) configured to bring back said ledge (25) from said retracted position to said holding position, during the opening movement of said infusion assembly (1).

## Patentansprüche

1. Maschine zum Zubereiten von aufgegossenen Getränken, umfassend:
- eine Infusionsanordnung (1) umfassend ein erstes Infusionselement (3) mit mindestens einem Hohlraum (4) zur zumindest teilweisen Aufnahme einer Kapsel oder Hülse (20) und ein zweites Infusionselement (5), das zum Zusammenwirken mit dem ersten Infusionselement (3) so geformt ist, dass es, wenn es damit gekoppelt ist, eine Infusionskammer definiert;
- mindestens eines unter dem ersten (3) und dem zweiten Infusionselement (5), das zwischen einer offenen Position, in der das zweite Infusionselement (5) vom ersten Infusionselement (3) entfernt ist, und einer geschlossenen Position bewegbar ist, in der das erste Infusionselement (3) mit dem zweiten Infusionselement (5) gekoppelt ist, um die Infusionskammer zu definieren;
- ein Gehäuse (23), das zum zumindest teilweise Enthalten der besagten Infusionsanordnung (1) geformt ist;
- eine Einlassöffnung (22), um den Zugang der Kapsel oder Hülse (20) zur Infusionsanordnung (1) zu ermöglichen;
- wobei das besagte Gehäuse (23) die besagte Einlassöffnung (22) aufweist;
**dadurch gekennzeichnet, dass** sie umfasst:
- einen Codeleser (9), der zumindest teilweise außerhalb des Gehäuses (23), oberhalb und in der Nähe der Einlassöffnung (22) angeordnet ist;
- wobei der Codeleser (9) zwischen einer Arbeitsposition und einer Ruheposition beweglich ist, wobei sich der Codeleser (9) in der Arbeitsposition zumindest teilweise außerhalb des Gehäuses (23) in einer Position befindet, die das Lesen eines Codes ermöglicht, der sich auf einer in die Einlassöffnung (22) eintretenden Kapsel oder Hülse (20) befindet, und wobei sich
der Codeleser (9) in der Ruheposition zumindest teilweise im Gehäuse (23) enthalten ist.

2. Maschine zum Zubereiten von aufgegossenen Getränken nach Anspruch 1, **dadurch gekennzeichnet, dass** sie ein Halteelement umfasst, das so konfiguriert ist, dass es die Kapsel oder Hülse (20) für ein Zeitintervall in einer Leseposition hält, bevor sie in die Einlassöffnung (22) eingeführt wird.

3. Maschine (10) zum Zubereiten von aufgegossenen Getränken nach Anspruch 1, **dadurch gekennzeichnet, dass** sie einen Gehäusesitz (11) für den Codeleser (9) umfasst, wobei der Gehäusesitz (11) so konfiguriert ist, dass er nicht aus dem Gehäuse (23) herausragt, wenn sich der Codeleser (9) in der Ruheposition befindet.

4. Maschine zum Zubereiten von aufgegossenen Getränken nach Anspruch 3, **dadurch gekennzeichnet, dass** wenn der Codeleser (9) sich in der Arbeitsposition befindet, er in Bezug auf den Gehäusesitz (11) vorsteht, während er nicht von dem Gehäusesitz vorsteht, wenn der Codeleser (9) sich in der Ruheposition befindet.

5. Maschine zum Zubereiten von aufgegossenen Getränken nach Anspruch 1, **dadurch gekennzeichnet, dass** sie elastische Mittel (27) umfasst, die so konfiguriert sind, dass sie den Codeleser (9) während der Öffnungsbewegung der Infusionsanordnung (1) von der Ruheposition in die Arbeitsposition zurückbringen.

6. Maschine zum Zubereiten von aufgegossenen Getränken nach Anspruch 1, **dadurch gekennzeichnet, dass** der Codeleser (9) ein Strichcodeleser ist.

7. Maschine zum Zubereiten von aufgegossenen Getränken nach Anspruch 1, **dadurch gekennzeichnet, dass** der Codeleser (9) ein zweidimensionaler Barcodeleser ist.

8. Maschine zum Zubereiten von aufgegossenen Getränken nach Anspruch 2, **dadurch gekennzeichnet, dass** das Halteelement eine Konsole (25) umfasst, die zwischen einer Halteposition (25), in der sie so angeordnet ist, dass sie die Einlassöffnung (22) zumindest teilweise abfängt, und einer zurückgezogenen Position, in der das Einsetzen der Kapsel oder Hülse (20) in die Infusionskammer möglich ist, verschiebbar ist.

9. Maschine zum Zubereiten von aufgegossenen Getränken nach Anspruch 8, **dadurch gekennzeichnet, dass** sie zweite elastische Mittel (28) umfasst, die so konfiguriert sind, dass sie die Konsole (25) während der Öffnungsbewegung der Infusionsanordnung (1) von der zurückgezogenen Position in die Halteposition zurückbringen.

## Revendications

1. Machine pour la préparation de boissons infusées, comprenant:
- un ensemble d'infusion (1) pourvu d'un premier élément d'infusion (3) pourvu d'au moins une cavité (4) pour recevoir au moins partiellement une capsule ou une dosette (20) et d'un second élément d'infusion (5) conformé pour coopérer avec ledit premier élément d'infusion (3) de sorte à définir, lorsqu'ils sont couplés entre eux, une chambre d'infusion;
- au moins l'un entre le premier (3) ou le second élément d'infusion (5) étant mobile entre une position ouverte, dans laquelle ledit second élément d'infusion (5) est éloigné dudit premier élément d'infusion (3), et une position fermée, dans laquelle ledit premier élément d'infusion (3) est couplé au second élément d'infusion (5) de sorte à définir ladite chambre d'infusion;
- une coque (23) conformée pour contenir au moins partiellement ledit ensemble d'infusion (1);
- une ouverture d'entrée (22) pour permettre l'accès de la capsule ou de la dosette 20 audit ensemble d'infusion (1);
- ladite coque (23) ayant ladite ouverture d'entrée (22);
**caractérisée en ce qu'**elle comprend:
- un lecteur de code (9) disposé au moins partiellement en dehors de ladite coque (23), au-dessus et à proximité de ladite ouverture d'entrée (22);
- ledit lecteur de code (9) est mobile entre une position de travail et une position de repos, dans laquelle, dans ladite position de travail, le lecteur de code (9) est au moins partiellement en dehors de ladite coque (23) dans une position telle à permettre la lecture d'un code placé sur une capsule ou sur une dosette (20) entrant dans ladite ouverture d'entrée (22) et dans laquelle, dans ladite position de repos,
ledit lecteur de code (9) est au moins partiellement contenu dans ladite coque (23).

2. Machine pour la préparation de boissons infusées selon la revendication 1, **caractérisée en ce qu'**elle comprend un élément de retenue configuré pour retenir ladite capsule ou ladite dosette (20) dans une position de lecture pendant un intervalle de temps avant d'être insérée dans ladite ouverture d'entrée (22).

3. Machine (10) pour la préparation de boissons infusées selon la revendication 1, **caractérisée en ce qu'**elle comprend un siège de logement (11) pour loger ledit lecteur de code (9); ledit siège de logement (11) étant configuré de sorte à ne pas faire saillie de ladite coque (23) lorsque le lecteur de code (9) est dans la position de repos.

4. Machine pour la préparation de boissons infusées selon la revendication 3, **caractérisée en ce que** le lecteur de code (9), lorsqu'il est dans ladite position de travail, fait saillie par rapport audit siège de logement (11), tandis que le lecteur de code (9) ne fait pas saillie dudit siège de logement lorsqu'il est dans ladite position de repos.

5. Machine pour 1a préparation de boissons infusées selon la revendication 1, **caractérisée en ce qu'**elle comprend des moyens élastiques (27) configurés pour ramener ledit lecteur de code (9) de ladite position de repos à ladite position de travail, lors du mouvement d'ouverture dudit ensemble d'infusion (1).

6. Machine pour la préparation de boissons infusées selon la revendication 1, **caractérisée en ce que** ledit lecteur de code (9) est un lecteur de code-barres.

7. Machine pour la préparation de boissons infusées selon la revendication 1, **caractérisée en ce que** ledit lecteur de code (9) est un lecteur de code-barres bidimensionnel.

8. Machine pour la préparation de boissons infusées selon la revendication 2, **caractérisé en ce que** ledit élément de retenue comprend un rebord (25) pouvant coulisser entre une position de retenue (25), dans laquelle il est disposé de sorte à intercepter au moins partiellement ladite ouverture d'entrée (22), et une position rétractée, dans laquelle l'insertion de la capsule ou de la dosette (20) à l'intérieur de la chambre d'infusion est permise.

9. Machine pour la préparation de boissons infusées selon la revendication 8, **caractérisée en ce qu'**elle comprend des seconds moyens élastiques (28) configurés pour ramener ledit rebord (25) de ladite position rétractée à ladite position de retenue, lors du mouvement d'ouverture dudit ensemble d'infusion (1).
